# EUROPÄISCHE PATENTSCHRIFT

(11) **EP 2 252 981 B1**
(45) Veröffentlichungstag und Bekanntmachung des Hinweises auf die Patenterteilung: **10.08.2011**
(21) Anmeldenummer: 09720645.2
(22) Anmeldetag: 03.03.2009
(51) Int. Cl.: G08B 3/10, H02P 6/00

(54) **Verfahren zur Ausgabe von akustischen Signalen**
Method for the output of acoustic signals
Procédé pour l'émission de signaux acoustiques

(30) Priorität: 11.03.2008 DE 102008013586
(43) Veröffentlichungstag der Anmeldung: 24.11.2010
(73) Patentinhaber: Siemens Aktiengesellschaft, 80333 München (DE)
(72) Erfinder: KRAUSE, Uwe, 30982 Pattensen (DE); NOLTE, Uwe, 30890 Barsinghausen (DE); SPANNBERGER, Jan, 31535 Neustadt am Rübenberge (DE)
(86) Internationale Anmeldenummer: PCT/EP2009/052495
(87) Internationale Veröffentlichungsnummer: WO 2009/112397

(56) Entgegenhaltungen:
- EP-A2- 1 067 669
- JP-A- 5 168 280
- schulze electronic gmbh: "future-u drehzahlsteller für bürsten- und sensorlose motoren" 28. Februar 2003 (2003-02-28), XP002533366 Gefunden im Internet: URL:http://www.schulze-elektronik-gmbh.de/ guide/gfutu6-d.pdf> [gefunden am 2009-06-18]

## Beschreibung

Vorrichtung und Verfahren zur Ausgabe von akustischen Signalen

Die Erfindung betrifft eine Vorrichtung und ein Verfahren zur Ausgabe von akustischen Signalen, z. B. Tonsignalen und/oder Sprachsignalen.

Üblicherweise werden akustische Signale mittels akustischer Wandler oder Schallwandler, wie z. B. Lautsprecher, Piezoelemente, ausgegeben. Dabei wandelt der Lautsprecher als elektromechanischer Wandler elektrische Signale in Luftschallsignale um. Insbesondere in technischen Anlagen, wie z. B. in einem Fahrzeug, insbesondere in einem Personenkraftfahrzeug, ist der verfügbare Bauraum zur Aufnahme von Lautsprechern begrenzt.

Der Erfindung liegt daher die Aufgabe zugrunde, eine einfache und Bauraum sparende Vorrichtung zur Ausgabe von akustischen Signalen anzugeben. Darüber hinaus ist ein geeignetes Verfahren zur Ausgabe von akustischen Signalen anzugeben. Des Weiteren ist eine geeignete Verwendung der Vorrichtung zur Ausgabe von akustischen Signalen anzugeben.

Das Verfahren betreffend wird die Aufgabe durch die im Patentanspruch 1 angegebenen Merkmale gelöst.

Vorteilhafte Weiterbildungen der Erfindung sind Gegenstand der Unteransprüche.

Die erfindungsgemäße Ausgabe von akustischen Signalen sieht vor, dass mindestens ein Anlagenteil einer technischen Anlage als Schallwandler dient, indem eine elektrische Größe des Anlagenteils derart steuerbar ist, dass das Anlagenteil unter Nutzung eines parasitären Effekts ein Schallfeld im hörbaren Frequenzbereich von 16 Hz bis 20000 Hz ausstrahlt.

Mit anderen Worten: Für die akustische Ausgabe werden bereits in der Anlage vorhandene Anlagenteile oder -komponenten verwendet, die im Allgemeinen nicht der Wandlung von elektrischen Größen in Schall dienen. Somit sind keine zusätzlichen bestimmungsgemäß Schall aussendende Komponenten oder Bauteile, wie Lautsprecher, erforderlich. Eine derartige Vorrichtung ist einfach und kostengünstig sowie Bauraum sparend. Bevorzugt erfolgt die Erzeugung des Schallfelds unter Ausnutzung von parasitären Effekten des Anlagenteils zusätzlich zum bestimmungsgemäßen Gebrauch ohne die bestimmungsgemäße Wirkung oder den bestimmungsgemäßen Gebrauch des Anlagenteils zu verändern oder zu begrenzen.

In einer möglichen Ausführungsform ist das Anlagenteil ein Motor, eine Induktivität, ein Steuergerät, ein Schaltnetzteil oder ein anderes Anlagenteil, das geeignet ist eine elektrische Größe in ein Schallfeld im hörbaren Frequenzbereich zu wandeln. Dabei kann das Anlagenteil gleichzeitig oder sequentiell zum bestimmungsgemäßen Gebrauch als Schallwandler dienen.

In einer besonders einfachen Ausführungsform der Erfindung ist die elektrische Größe mit einer steuerbaren Schaltfrequenz schaltbar. Beispielsweise wird die Schaltfrequenz eines Motors oder einer Pumpe entsprechend verändert. So kann die Schaltfrequenz in einer möglichen Ausführungsform auf eine oder mehrere Frequenzen im hörbaren Frequenzbereich, z. B. 5 kHz, absenkbar sein. Befindet sich das Anlagenteil, z. B. der Motor oder die Pumpe, im Schaltbetrieb und somit im bestimmungsgemäßen Gebrauch, so ist bzw. sind der Schaltfrequenz eine oder mehrere Frequenzen im hörbaren Frequenzbereich überlagerbar. Durch Überlagerung beispielsweise durch Modulation einer hörbaren Frequenz von 5 kHz auf die Schaltfrequenz eines Motors, die üblicherweise im nicht hörbaren Bereich von größer 20 kHz liegt, wird der bestimmungsgemäße Gebrauch des Motors nicht beeinflusst. Insbesondere tritt kein merklicher Effekt auf das mittlere Drehmoment des Motors ein, da die mechanische Eigenfrequenz des Motors wesentlich geringer ist.

Zur Überlagerung der hörbaren Frequenz auf die Schaltfrequenz oder Absenkung der Schaltfrequenz auf die hörbare Frequenz sind in einer weiteren Ausführungsform der Erfindung ein Frequenzgenerator und ein Modulator vorgesehen, welche die Frequenz/en im hörbaren Frequenzbereich erzeugen und diese als Schaltfrequenz nutzen oder diese der Schaltfrequenz überlagern. Dabei kann der Frequenzgenerator auch als ein in einem Mikrocontroller hinterlegter Algorithmus ausgebildet sein.

Je nach gewünschter Anwendung kann/können die Frequenz/en im hörbaren Frequenzbereich als mindestens ein Tonsignal oder als Sprachsignal ausgebbar sein.

Bei einer Ausgabe in Form eines Sprachsignals umfasst die Vorrichtung mindestens einen Sprachsyntheziser, der Informationsdaten in Sprachsignale umsetzt, deren Frequenzen dann der Schaltfrequenz überlagerbar sind oder auf deren Frequenzen die Schaltfrequenz absenkbar ist.

Zweckmäßigerweise dienen als Schallaustrittsfläche mindestens eine Wandung und/oder eine andere geeignete Komponente des Anlagenteils. Dabei kann das Schallfeld als Körperschallfeld und/oder Luftschallfeld ausgestrahlt werden.

Beim erfindungsgemäßen Verfahren zur Ausgabe von akustischen Signalen wird mindestens ein Anlagenteil einer technischen Anlage als Schallwandler verwendet, indem eine elektrische Größe des Anlagenteils derart gesteuert wird, dass vom Anlagenteil unter Nutzung eines parasitären Effekts ein Schallfeld im hörbaren Frequenzbereich von 16 Hz bis 20000 Hz ausgestrahlt wird.

Die Erfindung findet insbesondere Anwendung bei elektrisch betriebenen Türen, wie z. B. automatisch schwenk-, dreh- und/oder schiebbare Türen. Somit betrifft die Erfindung eine elektrisch betriebene Tür. Dabei umfasst die elektrisch betriebene Tür mehrere Anlagenteile, z. B. einen Motor und ein Schaltnetzteil, zum Öffnen oder Schließen der Tür. Erfindungsgemäß wird eines der Anlagenteile, wie z. B. der Motor als Vorrichtung zur Ausgabe von akustischen Signalen verwendet, indem das Anlagenteil als Schallwandler dient und eine elektrische Größe des Anlagenteils derart steuerbar ist, dass das Anlagenteil unter Nutzung eines parasitären Effektes ein Schallfeld im hörbaren Frequenzbereich von 16 Hz bis 20000 Hz ausstrahlt. Vorzugsweise handelt es sich bei der elektrisch betriebenen Tür insbesondere um eine Aufzugstür einer Aufzugsanlage.

Beispiele zur Ausgabe von akustischen Signalen werden anhand einer Zeichnung näher erläutert. Dabei zeigen:
- FIG 1: schematisch ein Fahrzeug als technische Anlage mit einem Motor und einem Steuergerät als Anlagenteile, welche als Schallwandler zur Ausgabe von akustischen Signalen dienen, und
- FIG 2: schematisch ein Ausführungsbeispiel für eine Steuerung einer elektrischen Größe eines Motors, so dass dieser als Schallwandler zur Ausgabe von akustischen Signalen dient.

Einander entsprechende Teile sind in allen Figuren mit den gleichen Bezugszeichen versehen.

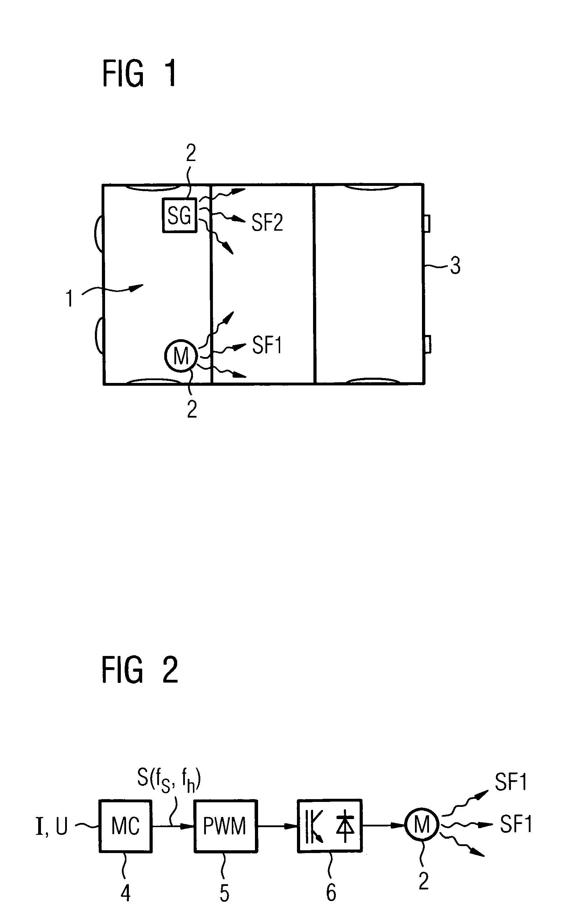

Figur 1 zeigt eine Vorrichtung 1 zur Ausgabe von akustischen Signalen, die in Form von Schallfeldern SF1, SF2 von mindestens einem Anlagenteil 2 einer technischen Anlage 3 abgestrahlt werden.

In Figur 1 sind als Anlagenteile 2 ein Motor M und ein Steuergerät SG dargestellt. Bei der technischen Anlage 3 nach Figur 1 handelt es sich um ein Fahrzeug. Auch kann es sich beispielsweise bei der Anlage 3 um eine Aufzugsanlage mit steuerbaren Aufzugstüren oder andere technische Anlagen mit elektrisch und motorisch betriebenen Steuerungen handeln. Auch kann jedes andere, insbesondere schaltbare oder getaktete Anlagenteil 2, wie z. B. eine Induktivität, insbesondere eine Stromversorgung, ein Schaltnetzteil, ein DC/DC-Wandler, verwendet werden.

Kern der Erfindung ist es, dass mindestens ein Anlagenteil 2 als Schallwandler dient, indem eine elektrische Größe, z. B. Strom I oder Spannung U, des Anlagenteils 2 derart steuerbar ist, dass das Anlagenteil 2 unter Nutzung eines parasitären Effekts ein Schallfeld SF1 oder SF2 im hörbaren Frequenzbereich von 16 Hz bis 20000 Hz ausstrahlt.

Dazu ist das Anlagenteil 2, z. B. der Motor M oder das Steuergerät SG, derart ausgelegt, dass durch Steuerung einer der elektrischen Größen, z. B. der Spannung U oder des Stroms I, das Anlagenteil 2 selbst ein Schallfeld SF1 oder SF2 im hörbaren Frequenzbereich ausstrahlt und somit die elektrische Größe in das Schallfeld SF1 oder SF2 gewandelt wird.

Je nach Art des Anlagenteils 2 kann dieses dabei gleichzeitig oder sequentiell zum bestimmungsgemäßen Gebrauch als Schallwandler eingesetzt werden. Ein Beispiel für eine gleichzeitige oder sequentielle Nutzung des Anlagenteils 2 als Schallwandler wird nachfolgend an einem mit einer Schaltfrequenz f schaltbaren oder getakteten Anlagenteil 2, z. B. einem schaltbaren Motor M, näher beschrieben.

In Figur 2 ist ein Schaltungsbild zur Ansteuerung des Motors M und mindestens einer elektrischen Größe, insbesondere eines mit einer Schaltfrequenz fₛ schaltbaren Stroms I, gezeigt. Dabei dient der Motor M zeitweise oder fortlaufend als Schallwandler zur Ausgabe von akustischen Signalen in Form eines ausstrahlbaren Schallfeldes SF1.

Zur Nutzung des Motors M, z. B. eines pulsweitenmodulierten Elektromotors, als Schallwandler unter Nutzung eines parasitären Effekts werden die zur Steuerung des Motors M vorhandenen Komponenten, wie ein Mikrocontroller 4, ein Pulsweitenmodulator 5 und Transistorsteuerstufen 6 eines Wechselrichters verwendet.

Dabei kann zur Ausgabe von akustischen Signalen die Schaltfrequenz fₛ der Steuersignale S des Stroms I für die Pulsweitenmodulation PWM des Motors M auf eine oder mehrere Frequenzen fₕ im hörbaren Frequenzbereich abgesenkt werden. Üblicherweise ist die Schaltfrequenz fₛ wesentlich größer als 20 kHz und liegt somit außerhalb des menschlichen Hörbereiches. Zur Nutzung des Motors M als Schallwandler und Ausgabe von akustischen Signalen unter Nutzung eines parasitären Effekts wird die Schaltfrequenz fₛ beispielsweise im schaltfreien Zustand auf eine hörbare Frequenz fₕ von kleiner 10000 Hz, insbesondere auf 5000 Hz abgesenkt, so dass beispielsweise durch das in diesem Frequenzbereich ausgestrahlte oder abgestrahlte Schallfeld SF1 vom Motor M ein Warn- oder Signalton ausgebbar ist. Dabei kann die Schaltfrequenz fₛ für einen vorgebbaren Zeitraum abgesenkt werden, so dass beispielsweise ein kurzer Warnton ausgebbar ist.

Dient der Motor M beispielsweise zur Steuerung einer Aufzugstür einer Aufzugsanlage oder einer Automatiktür in einem Gebäude, einem Fahrzeug, z. B. einer Bahn, und befindet sich eine Person beim Schließen der Aufzugstür bzw. Automatiktür im Gefahrenbereich, so kann durch Steuerung des Motors M und Absenken der Schaltfrequenz fₛ auf die hörbare Frequenz fₕ für einen kurzen Zeitbereich der Motor M selbst eine kurzen Warnton durch Aussendung eines Schallfelds SF1 mit der hörbaren Frequenz fₕ ausgeben. Somit ist eine einfache akustische Ausgabe mit Signalisierung, dass ein Gefahrenzustand vorliegt oder bevorsteht, ermöglicht.

Alternativ zur Absenkung und insbesondere zeitlich begrenzten Ausgabe von akustischen Signalen des Motors M kann für eine frei steuerbare akustische Signalausgabe über den Motor M unter Nutzung eines parasitären Effekts der Schaltfrequenz fₛ eine hörbare Frequenz fₕ von beispielsweise 5000 Hz überlagert werden. Hierzu wird beispielsweise die hörbare Frequenz fₕ auf die Schaltfrequenz f moduliert. Hierdurch ist auch im geschalteten Zustand des Motors M eine entsprechende Schallemission durch Ausstrahlung oder Abstrahlung des Schallfeldes SF1 vom Motor M mit Schallwellen im hörbaren Frequenzbereich, z. B. mit hörbaren Frequenzen fh um 5000 Hz, möglich ist.

Sowohl zur zeitlich begrenzten als auch zur frei steuerbaren akustischen Signalausgabe durch Schallemission über den Motor M umfasst der Mikrocontroller 4 einen entsprechenden Steuer- und Regelungsalgorithmus zur Steuerung einer der elektrischen Größen, z. B. des Stroms I, des Motors M, mit der hörbaren Frequenz fₕ, wobei diese erzeugt wird und anschließen der Schaltfrequenz fₛ überlagert wird oder alternativ die Schaltfrequenz fₛ auf die hörbare Frequenz fₕ abgesenkt wird.

Je nach Art der Steuerung und Signalerzeugung der elektrischen Größe, des Strom I oder der Spannung U, des Anlagenteils 2 kann dabei das Schallfeld SF1 oder SF2 ein Tonsignal, z. B. ein Warnton oder eine Sirene, oder ein Sprachsignal, z. B. eine Sprachausgabe, aussenden.

Zur Aussendung eines Sprachsignals kann die Vorrichtung in nicht näher dargestellter Art und Weise mindestens einen Sprachsyntheziser umfassen, der Informationsdaten in Sprachsignale umsetzt, deren hörbare Frequenzen fₕ der Schaltfrequenz fₛ überlagerbar sind oder auf deren Frequenzen fₕ die Schaltfrequenz fₛ absenkbar ist. Dabei kann der Sprachsyntheziser beispielsweise integraler Bestandteil des Mikrocontrollers 4 sein.

Je nach Art und Aufbau des als Schallwandler dienenden Anlagenteils 2 kann als Schallaustrittsfläche mindestens eine Wandung und/oder eine andere geeignete Komponente des Anlagenteils 2 benutzt werden. Dabei kann das jeweilige Schallfeld SF1, SF2 als Körperschallfeld und/oder Luftschallfeld vom Anlagenteil 2 abgestrahlt werden.

Darüber hinaus ist die Erfindung auch für andere Anlagenteile 2, wie z. B. getaktete Stromversorgungen, Schaltnetzteile, DC/DC-Wandler, einsetzbar.

## Patentansprüche

1. Verfahren zur Ausgabe von akustischen Signalen, wobei mindestens ein Anlagenteil (2) einer elektrisch betriebenen Tür mit mehreren Anlagenteilen zum Öffnen oder Schließen der Tür als Schallwandler verwendet wird, indem eine elektrische Größe, Strom I oder Spannung U, des Anlagenteils (2) derart gesteuert wird, dass vom Anlagenteil (2) ein Schallfeld (SF1, SF2) unter Nutzung eines parasitären Effekts im hörbaren Frequenzbereich von 16 Hz bis 20000 Hz ausgestrahlt wird, wobei der Schall während des Betriebs des Anlagenteils gleichzeitig zu dessen bestimmungsgemäßem Gebrauch ausgestrahlt wird.

2. Verfahren nach Anspruch 1,
**dadurch gekennzeichnet, dass**
als Anlagenteil (2) ein Motor (M), eine Induktivität, ein Steuergerät (SG) oder ein anderes Anlagenteil verwendet wird,
das geeignet ist eine elektrische Größe, Strom I oder Spannung U, in ein Schallfeld (SF1, SF2) im hörbaren Frequenzbereich zu wandeln.

3. Verfahren nach einem der Ansprüche 1 oder 2,
**dadurch gekennzeichnet, dass**
die elektrische Größe, Strom I oder Spannung U, des Anlagenteils (2) mit einer steuerbaren Schaltfrequenz (fₛ) geschaltet wird.

4. Verfahren nach Anspruch 3,
**dadurch gekennzeichnet, dass**
die Schaltfrequenz (fₛ) auf eine oder mehrere Frequenzen (fₕ) im hörbaren Frequenzbereich abgesenkt wird.

5. Verfahren nach Anspruch 3,
**dadurch gekennzeichnet, dass**
der Schaltfrequenz (fₛ) eine oder mehrere Frequenzen (fₕ) im hörbaren Frequenzbereich überlagert wird bzw. werden.

6. Verfahren nach einem der vorhergehenden Ansprüche,
**dadurch gekennzeichnet, dass**
ein Frequenzgenerator und ein Modulator, zum Beispiel ein Pulsweitenmodulator, (5) verwendet werden, welche die Frequenz/en (fₕ) im hörbaren Frequenzbereich erzeugen und der Schaltfrequenz (fₛ) überlagern.

7. Verfahren nach einem der vorhergehenden Ansprüche,
**dadurch gekennzeichnet, dass**
die Frequenz/en (fₕ) im hörbaren Frequenzbereich als mindestens ein Tonsignal ausgegeben wird bzw. werden.

8. Verfahren nach einem der vorhergehenden Ansprüche,
**dadurch gekennzeichnet, dass**
mindestens ein Sprachsyntheziser verwendet wird, der Informationsdaten in Sprachsignale umsetzt, deren hörbare Frequenzen (fₕ) der Schaltfrequenz (fₛ) überlagert werden oder auf deren Frequenzen (fₕ) die Schaltfrequenz (fₛ) abgesenkt wird.

9. Verfahren nach einem der vorhergehenden Ansprüche,
**dadurch gekennzeichnet, dass**
die Frequenzen (fₕ) im hörbaren Frequenzbereich als mindestens ein Sprachsignal ausgegeben werden.

10. Verfahren nach einem der vorhergehenden Ansprüche,
**dadurch gekennzeichnet, dass**
als Schallaustrittsfläche mindestens eine Wandung und/oder eine andere geeignete Komponente des Anlagenteils (2) verwendet wird.

11. Verfahren nach einem der vorhergehenden Ansprüche,
**dadurch gekennzeichnet, dass**
die Tür eine Aufzugstür einer Aufzugsanlage ist.

## Claims

1. Method for outputting audible signals, wherein at least one installation portion (2) of an electrically operated door having a plurality of installation portions for opening or closing the door is used as a sound transducer by controlling an electrical variable, that is to say current I or voltage U, for the installation portion (2) such that the installation portion (2) emits a sound field (SF1, SF2) using a parasitic effect in the audible frequency range from 16 Hz to 20 000 Hz, the sound being emitted during operation of the installation portion at the same time as the latter is being used as intended.

2. Method according to Claim 1,
**characterized in that**
the installation portion (2) used is a motor (M), an inductance, a controller (SG) or another installation portion which is suitable for converting an electrical variable, that is to say current I or voltage U, into a sound field (SF1, SF2) in the audible frequency range.

3. Method according to one of Claims 1 and 2,
**characterized in that**
the electrical variable, that is to say current I or voltage U, for the installation portion (2) is switched at a controllable switching frequency (fₛ).

4. Method according to Claim 3,
**characterized in that**
the switching frequency (fₛ) is lowered to one or more frequencies (fₕ) in the audible frequency range.

5. Method according to Claim 3,
**characterized in that**
the switching frequency (fₛ) is overlaid with one or more frequencies (fₕ) in the audible frequency range.

6. Method according to one of the preceding claims,
**characterized in that**
a frequency generator and a modulator, for example a pulse-width modulator, (5) are used which produce the frequency/frequencies (fₕ) in the audible frequency range and overlay them on the switching frequency (fₛ).

7. Method according to one of the preceding claims,
**characterized in that**
the frequency/frequencies (fₕ) in the audible frequency range is/are output as at least one audible signal.

8. Method according to one of the preceding claims,
**characterized in that**
at least one voice synthesizer is used which converts information data into voice signals, the audible frequencies (fₕ) of which are overlaid on the switching frequency (fₛ) or to the frequencies (fₕ) of which the switching frequency (fₛ) is lowered.

9. Method according to one of the preceding claims,
**characterized in that**
the frequencies (fₕ) in the audible frequency range are output as at least one voice signal.

10. Method according to one of the preceding claims,
**characterized in that**
the sound outlet area used is at least one wall and/or another suitable component of the installation component (2).

11. Method according to one of the preceding claims,
**characterized in that**
the door is a lift door in a lift installation.

## Revendications

1. Procédé d'émission de signaux acoustiques, dans lequel au moins une partie ( 2 ) d'installation d'une porte fonctionnant électriquement et ayant plusieurs parties d'installation pour l'ouverture et la fermeture de la porte est utilisée comme transducteur de son, en commandant une grandeur électrique, donc le courant I ou la tension U, de la partie ( 2 ) d'installation, de manière à émettre par la partie ( 2 ) d'installation, un champ ( SF1, SF2 ) sonore en utilisant un effet parasite dans le domaine de fréquence audible de 16 Hz à 20 000 Hz, le son étant émis pendant le fonctionnement de la partie d'installation en même temps qu'on utilise la partie d'installation conformément à sa destination.

2. Procédé suivant la revendication 1,
**caractérisé en ce que**
l'on utilise, comme partie ( 2 ) d'installation, un moteur ( M ), une inductance, un appareil ( SG ) de commande ou une partie d'installation autre, qui est propre à transformer une grandeur électrique, donc le courant I ou la tension U, en un champ ( SF1, SF2 ) sonore dans le domaine de fréquence audible.

3. Procédé suivant l'une des revendications 1 ou 2,
**caractérisé en ce que**
l'on commute la grandeur électrique, donc le courant I ou la tension U, de la partie ( 2 ) d'installation à une fréquence ( fₛ ) de commutation qui peut être commandée.

4. Procédé suivant la revendication 3,
**caractérisé en ce que**
l'on abaisse la fréquence ( fₛ ) de commutation jusqu'à une ou plusieurs fréquences ( fₕ ) dans le domaine de fréquence audible.

5. Procédé suivant la revendication 3,
**caractérisé en ce que**
l'on superpose une ou plusieurs fréquences ( fₕ ) dans le domaine de fréquence audible à la fréquence ( fₛ ) de commutation.

6. Procédé suivant l'une des revendications précédentes,
**caractérisé en ce que**
l'on utilise un générateur de fréquence et un modulateur, par exemple un modulateur ( 5 ) d'impulsion en largeur, qui produit la ou les fréquences ( fₕ ) dans le domaine de fréquence audible et les superpose à la fréquence ( fₛ ) de commutation.

7. Procédé suivant l'une des revendications précédentes,
**caractérisé en ce que**
l'on émet la ou les fréquences ( fₕ ) dans le domaine de fréquence audible sous la forme d'au moins un signal de tonalité.

8. Procédé suivant l'une des revendications précédentes,
**caractérisé en ce que**
l'on utilise au moins un synthétiseur vocal, qui transforme des données d'information en des signaux vocaux, dont les fréquences ( fₕ ) audibles sont superposées à la fréquence ( fₛ ) de commutation ou la fréquence ( fₛ ) de commutation est abaissée à leur fréquence ( fₕ ).

9. Procédé suivant l'une des revendications précédentes,
**caractérisé en ce que**
l'on émet les fréquences ( fₕ ) dans le domaine de fréquence audible sous la forme d'au moins un signal vocal.

10. Procédé suivant l'une des revendications précédentes,
**caractérisé en ce que**
l'on utilise, comme surface de sortie du son, au moins une paroi et/ou un autre composant approprié de la partie ( 2 ) d'installation.

11. Procédé suivant l'une des revendications précédentes,
**caractérisé en ce que**
la porte est une porte d'ascenseur d'une installation d'ascenseur.
